Europäisches Patentamt

European Patent Office

Office européen des brevets

(11) Publication number: **0 340 489**
**A2**

## (12) EUROPEAN PATENT APPLICATION

(21) Application number: **89106451.1**

(22) Date of filing: **12.04.89**

(51) Int. Cl.⁴: **B29C 45/17**

(30) Priority: **06.05.88 IT 2047888**

(43) Date of publication of application:
**08.11.89 Bulletin 89/45**

(84) Designated Contracting States:
**DE ES FR GB**

(71) Applicant: **NEGRI BOSSI S.P.A.**
**Viale Europe 64**
**I-20093 Cologno Monzese(IT)**

(72) Inventor: **Bodini, Gianni**
**Via Maggioni 13**
**I-21026 Gavirate (Varese)(IT)**
Inventor: **Castelli, Romano**
**Via Lainate 64**
**I-20017 Rho (Milan)(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Improvements in injection moulding presses, particularly for plastics materials.**

(57) An injection moulding press, particularly for plastics materials, having a mould closure unit (1) comprising a moulding head (2), a reaction or fixed platen (3) and a movable platen (7) slidable in known manner on tie rods (4) which connect said moulding head (2) to the fixed platen (3), said tie rods (4) having their ends (5, 6) removably secured to said moulding head (2) and fixed platen (3), characterised by comprising hydraulically operated jaw means (14) which clamp one end (6) of at least one tie rod (4) and secure said end (6) to the fixed platen (3), the other end (5) of said tie rod (4) being connected to the moulding head (2) by hydraulically controlled catch means (13) which when in one position fix said tie rod (4) to said head (2) whereas when in their other position they release said end (5) of the tie rod (4) from the head (2) to allow at least one hydraulic actuator (21) to move the tie rod (4) axially when said catch means (13) are in the release position.

Fig. 1

# IMPROVEMENTS IN INJECTION MOULDING PRESSES, PARTICULARLY FOR PLASTICS MATERIALS

This invention relates to an injection moulding press, particularly for plastics materials, having a mould closure unit comprising a moulding head, a reaction or fixed platen and a movable platen slidable in known manner on tie rods (generally two or four in number) which connect said moulding head to the fixed platen. Said closure unit has two main functions, namely to open and close the two mould parts fixed to opposing portions of the fixed platen and movable platen respectively, and to develop the press closure force so as to react to the thrust of the plastics material during injection. This closure force is generated in known manner by the tension induced in the tie rods. In a closure unit of the aforesaid type the problem can arise of having to insert between the tie rods (advantageously four in number) a mould the dimensions of which exceed the distance between the tie rods.

The known manner of solving this problem is to manually release the ends of at least one tie rod from the fixed platen and from the moulding head, and then to successively move the movable platen away from and towards said head (the tie rod being secured to this movable platen only during its movement towards the head), to obtain an axial movement of said tie rod and thus its separation from the fixed platen. In this manner a space is created between the tie rods which is sufficient to allow the two parts of the mould to be inserted.

In recent years, with the advance of technology, there has been an increasing tendency to automate industrial production. This requirement has also been felt in those industries using injection moulding presses for plastics materials in which automated units already exist for performing some of the operations connected with the use of such presses, such as the loading of the moulds. However, when the mould dimensions exceed the distance between the tie rods, the release of at least one tie rod from the head and fixed platen and its axial movement or "withdrawal" are still done manually.

This results in a period of press inactivity and therefore a halt in production which considerably affects the operating cost of the machine.

An object of the present invention is therefore to provide a press of the aforesaid type in which the axial movement or withdrawal of at least one tie rod is done automatically, so reducing the machine non-production time, its operating costs and as a result the cost of the manufactured articles.

This and further objects which will be more apparent to the expert of the art are attained by an injection press of the aforesaid type, characterised by hydraulically operated jaw means which clamp one end of at least one tie rod and secure this end to the fixed platen, the other end of said tie rod being connected to the moulding head by hydraulically controlled catch means which when in one position fix said tie rod to said head whereas when in their other position they release said end of the tie rod from the head to allow at least one hydraulic actuator to move the tie rod axially when said catch means are in the release position.

The present invention will be more apparent from the accompanying drawing, which is provided by way of non-limiting example and in which:

Figure 1 is a diagrammatic side view of a press closure unit constructed in accordance with the invention, said figure also diagrammatically showing devices for operating parts of said machine;

Figure 2 is a view of a detail of the invention in the direction of the arrow A of Figure 1;

Figure 3 is a view of a detail of the invention in the direction of the arrow B of Figure 1;

Figure 4 is a partly sectional enlarged view of the detail of Figure 2;

Figure 5 is a section on the line V-V of Figure 4.

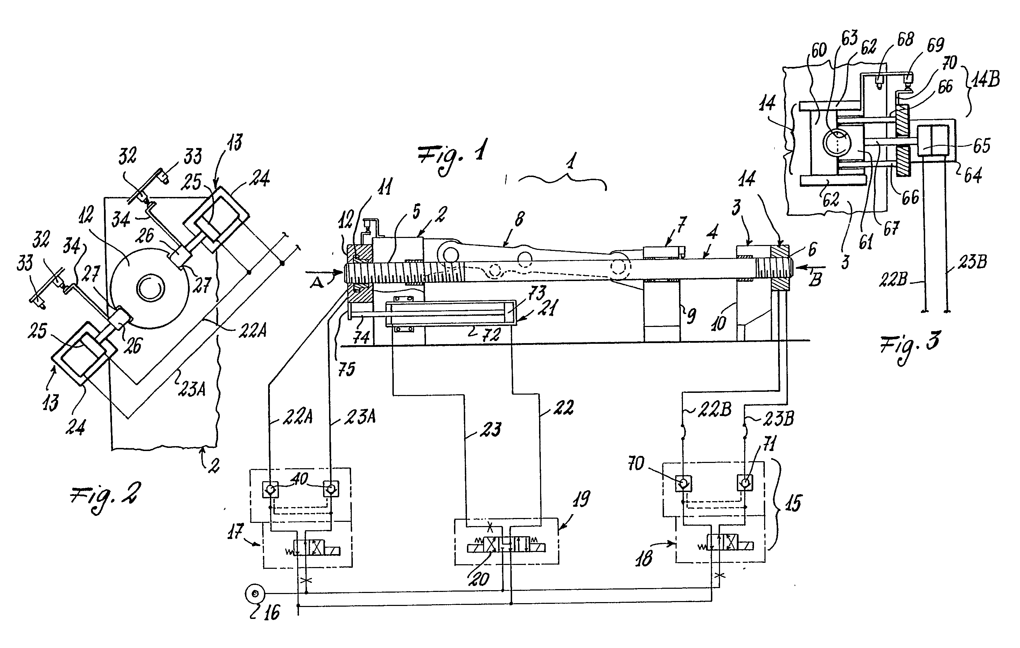

With reference to said figures, the injection moulding press, particularly for plastics materials, contains a closure unit indicated overall by 1 comprising a known moulding head 2 and a known reaction or fixed platen 3. Said head 2 and said fixed platen 3 are connected together by tie rods 4 (only one of which is shown in Figure 1) each having a threaded end 5 secured to the head 2 and the other end 6, also threaded, secured to the platen 3.

On the tie rods 4, which can be two or four in number, there slides a movable platen 7, moved for example by a known gripping toggle 8. One half-mould (not shown) is fixed to a face 9 of the movable platen 7 in known manner, the other half mould being fixed to the face 10 of the fixed platen 3 opposite said face 9. The threaded end 5 of at least one tie rod 4 cooperates (see Figures 1 and 2) with a threaded means 11 held in a box member 12 secured in any known manner on the head 2 and on which hydraulically operated catch means 13 operate. At the same time the threaded end 6 of said tie rod cooperates (see Figures 1 and 3) with hydraulically operated jaw means 14 having an internal thread and secured in any known manner to the fixed platen 3. Said catch means 13 and said jaw means 14 are operated (see Figure 1) by a hydraulic circuit 15 comprising in particular a pump 16, solenoid valve units 17 and 18 operating on the catch means 13 and on the jaw means 14 respectively and a further unit 19 comprising a further solenoid valve 20 operating on at least one hydraulic actuator 21 connected to the box member 12 disposed on the head 2. From each unit 17, 18 and 19 there extend pipes 22A, 23A, 22, 23 and 22B, 23B through which the pressurised fluid is fed to said means 13 and to an actuator 14B for opening the jaw means 14, and also to the actuator 21.

More specifically (see Figures 2, 4, 5) the catch means 13 comprise a cylinder 24 within which there moves a piston 25, the end part 26 of which is arranged to cooperate with a seat 27 provided in the box member 12.

Said end part 26 slides within a chamber 28 formed in a member 29 to which the cylinder 24 is fixed in any known manner (for example by bolts 30 as shown in Figure 4). The member 29 is fixed to the moulding head 2, for example by bolts 31, and supports travel limit sensors 32 and 33 with which there cooperates a member 34 fixed in any known manner to the end part 26 of said piston 26. Said member 34 emerges from the member 29 through a slot 35 (within which said member slides following the movement of the piston 25) and cooperates in this manner with said two sensors 32 and 33.

The two pipes 22A and 23A of the hydraulic circuit lead to the cylinder 24. Said pipes are connected to channels 36 and 37 provided in the cylinder 24 and opening into the cylinder chamber 38 in which the head 39 of the piston 25 moves. Said channels 36 and 37 open at ends 36A and 37A respectively corresponding to the travel limit positions reached by the piston 25 within the cylinder 24. Normal non-return valves 40 (see Figure 1) are connected into the pipes 22A and 23A at any point close to the solenoid valve unit 17.

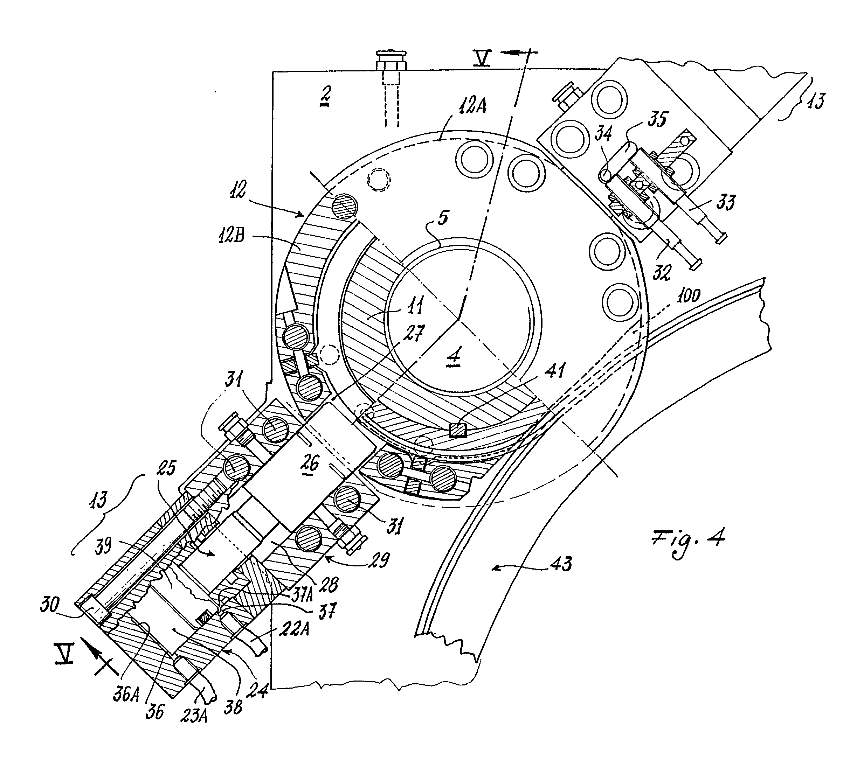

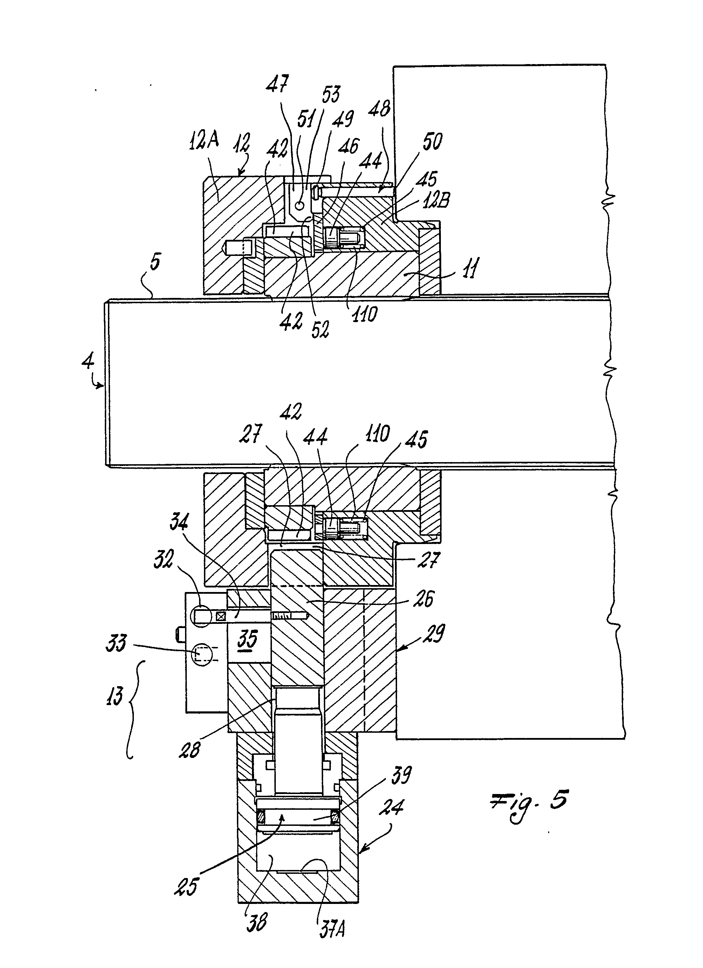

The box member 12 on which the catch means 13 operates contains the threaded means 13, as stated. A ring gear 42 is fixed by keys 41 (see Figures 4 and 5) to the means 11 cooperating with the threaded end 5 of the tie rod 4, and cooperates with a known gear means 43 connected to the moulding head 2.

As is well known, the purpose of said gear means is to regulate, when the machine is open, the distance between the two half-moulds in relation to their thickness by cooperating with gear means rigid with the ends of the various tie rods (in the case of the tie rod 4 said gear means being defined by the ring gear 42 disposed on the threaded means 11) at the moulding head 2. In this respect the various machine tie rods are threaded at their ends so that rotating the respective bolts varies the useful length of the tie rods and thus the distance between the fixed platen 3 and movable platen 7. If the forces exerted by said tie rods on the fixed parts are not uniform, misalignment of the half-moulds (rigid with the movable platen 7 and fixed platen 3) can take place, so causing them to fracture when they are brought together. In order to therefore simultaneously regulate said forces there is provided the gear means 43 which, on rotation by known means, causes simultaneous rotation of the screwed bolts to thus regulate the traction between the moulding head 2 and the fixed part 3.

To allow cooperation between the gear means 43 and the ring gear 42, the box member defined by two parts 12A and 12B engaged with each other comprises a corridor 100 into which said gear means 43 partly penetrates.

Braking means, the function of which is described hereinafter, are provided in the box member 12 to act when the tie rod 4 moves on said ring gear 42.

Said braking means comprise pins 44 loaded by springs 45 positioned in seats 110 in the box member 12 and acting on annular members 46 provided in proximity to the ring gear 42. At least one rocker member 47 located in the box member 12 and urged by a pin 48 disposed at one end of said box member 12 acts on said annular member 46 against the action of said pins 44. The head 49 of said pin 48 acts on the rocker member 47, whereas the end 50, distant from said head and emerging partially from the box member 12, cooperates with the moulding head 2. Specifically, the head 52 of the rocker member, pivoted at 51, acts on the annular member 46, whereas the head of the pin 48 acts on a part 53 of the rocker member on the opposite side of the pin 51 to the head 52.

The jaw means 14 (see Figure 3) comprise a first and second half-jaw 60 and 61 movable relative to each other along guides defined by shoulders 62 fixed to the fixed platen 3.

Each half-jaw 60 and 61 comprises a semicylindrical cavity 63 which is threaded such that when the half-jaws are engaged, a cylindrical cavity is formed into which the threaded end 6 of the tie rod 4 penetrates.

As stated, the jaw means 14 are operated by the hydraulic circuit 15. Specifically, this operation is carried out by the opening actuator 14B which comprises a cylinder within which there slides a piston 65 and which is slidable on supports (not shown) fixed to the fixed platen 3. The half-jaw 60 is connected to the cylinder 64 by bars 66, and the other half-jaw is connected to the piston by a piston rod 67.

To control the opening of the jaws 60 and 61, travel limit sensors 68 and 69 are provided cooperating with a member 70 fixed to the cylinder 64, which is movable relative to the fixed platen 3, as stated.

Finally, the pipes 22B and 23B of the hydraulic circuit 15 are connected to the cylinder 64 in two different positions so as to enable the cylinder 64 and the piston 65 present in it to undergo movement. The connections between said pipes 22B, 23B and the cylinder 64 are identical to those between the pipes 22A, 23A and each of the catch means 13, and they will therefore not be further described. The pipes 22B and 23B are also provided with non-return valves, 70 and 71.

As stated heretofore, the pipes 22 and 23 of the hydraulic circuit 15 connect the unit 19, comprising the solenoid valve 20, to at least one actuator 21 comprising a cylinder 72 and a piston 73. Said actuator 21 is fixed to the moulding head 3 in any known manner.

The piston 73 comprises a rod 74 emerging from the cylinder 72 and terminating at a platen 75 projecting laterally from the box member 12. Said pipes 22 and 23 are connected to the cylinder 72, the connection between these latter and the cylinder being identical to the described connection between the pipes 22B, 23B and the cylinder 64 of the jaw means 14.

It will be assumed that a mould is now to be inserted between the movable platen 7 and fixed platen 3, the mould however being of larger dimensions than the distance between the tie rods 4. At least one of said tie rods must therefore be moved axially to withdraw it from the fixed platen 3 in order to form a space between the tie rods sufficient to allow the two mould parts to be inserted between them, these parts being then fixed to the face 9 of the movable platen 7 and to the face 10 of the fixed platen 3. To do this, the circuit 15 feeds fluid, pressurised by the pump 16, through the pipe 23B to the actuator 14B for opening the jaw means 14. This fluid reaches the cylinder 64 and penetrates into it to move both the piston 65 and said cylinder relative to each other.

By virtue of these movements the rod 67 of the piston 65 displaces the half-jaw 61 and, by way of the bars 66, the cylinder 64 simultaneously displaces the half-jaw 60, this latter in the opposite direction to the half-jaw 61. The jaw means 14 therefore open to release the end 6 of the tie rod 4. The extent of opening of the two half-jaws 60 and 61 (slidable along the guides 62 rigid with the fixed platen 3) is controlled by the sensors 68 and 69. In practice, when the member 70 rigid with the cylinder 64 comes into contact with the sensor 68 the opening of the half-jaws 60 and 61 is complete.

If for any reason the member 70 does not come into contact with said sensor, known acoustic and/or luminous means (not shown) warn that the jaw means 14 have not opened, and at the same time the withdrawal of the tie rod 4 is automatically interrupted. Following the opening of the jaw means 14, the box member 12 located at the other end 5 of the tie rod 4 is released from its engagement by the catch means 13. This is done by feeding pressurised fluid to the cylinders 24 through the pipe 22A. Specifically, the pressurised fluid passing through said pipe 22A reaches the channel 37 of each cylinder 24, and traverses this channel to pass into the chamber 38 of said cylinder at the end 37A in a position corresponding with the piston 25 contained in said cylinder. The fluid pressure causes said piston to move so that the end part 26 of said piston withdraws from the seat 27 in the box member 12.

The successful release of said member 12 is indicated by the sensor 33, with which the member 34 rigid with the end part 26 of the piston 25 cooperates. In this respect, when said member moving within the slot 35 is brought into contact with said sensor 33 by the movement of said end part 26, said end has completely withdrawn from the seat 27 in the box member 12. All sensors 32, 33, 68, 69 are connected to known control means which follow the progress of all the various operational stages of the press and in particular the withdrawal of the tie rod 4.

Finally, also in this case if the member 34 does not separate from the sensor 32 (which senses the presence of the end 26 of the piston 25 within the seat 27 of the box member 12) or does not make contact with the other sensor 33 by virtue of the movement of the piston 25, then acoustic and/or optical means indicate defective operation and at the same time the withdrawal of the tie rod 4 ceases automatically.

When the member 12 has been released by the catch means 13, pressurised fluid is fed through the pipe 22 to the actuator 21. This fluid enters the cylinder 72 to move the piston 73 which, as its rod 74 is rigid with the box member 12, causes this member to move so that it withdraws from the moulding head 2. The movement of the box member 12 also results in the movement of the tie rod 4, which has said member fixed on its end, so that a gap is formed between the press tie rod which is sufficient to allow the mould to be inserted between them. The rod 74 rigid with the piston 73 must obviously have a length sufficient to allow the box member 12 (and thus the tie rod 4) to move to the extent of forming between the tie rods of the closure unit 1 the gap necessary to allow the mould to be inserted between them.

As the threaded means 11 provided with the ring gear 42 are mounted on the tie rod 4, the arrangement must be such as to prevent said threaded means 11 undergoing even minimum rotation when the tie rod rotates. This is because even minimum rotation of said threaded means would move the ring gear 42 into a position such as to no longer allow the tie rod 4 to be reinserted without damaging the gear means 43 and the mechanical parts present in the box member 12.

In this respect, the teeth of the ring gear 42 could find themselves in front of the teeth of the gear means 43, so opposing the return of the tie rod 4 into its seats.

A further drawback is that if the ring gear 42 of the means 11 rotates, the tie rod 4 would also rotate. If the tie rod 4 had returned to its seats, this would result in a non-uniform forces exerted on the fixed parts (head 12 and platen 3) of the closure unit 1 and therefore the possibility of damage to the mould and to the mechanical parts of the press during moulding.

The braking means comprising the pins 44 loaded by the springs 45 are provided to prevent this.

The pins 44 act on the annular member 46 to urge it against the ring gear 42 so as to halt its rotation when the box member 12 is withdrawn from the moulding head 2. In this respect, when said member 12 is in contact with said head, the pin 48 is urged into contact with the rocker member 47 the head 52 of which opposes the action of the pins 44 to withdraw the annular member 46 from the ring gear 42 to allow it to rotate together with the gear means 43.

By this means, the ring gear 42 does not rotate when the box member 12 is separated from the head 3 and maintains the position reached before withdrawal of the tie rod 4.

The axial movement of the tie rod 4 to return the tie rod to its seats take place in a manner identical to that described. In this latter case pressurised fluid is fed at successive moments through the pipes 23, 23A and 23B of the circuit 15 to the respective actuator means 21, 13 and 14B. The fluid produces a movement respectively of the box member 12, catch means 13 and jaw means 14 opposite to that described, with final clamping of the tie rod 4 to the moulding head 2 and to the fixed platen 3. Finally, the gear means 43 regulates the "tension" of the tie rods 4 in known manner.

A press provided with the described closure unit enables at least one tie rod 4 to be automatically withdrawn with consequent advantages in terms of time and cost compared with an operation of the same type performed manually.

## Claims

1. An injection moulding press, particularly for plastics materials, having a mould closure unit (1) comprising a moulding head (2), a reaction or fixed platen (3) and a movable platen (7) slidable in known manner on tie rods (4) which connect said moulding head (2) to the fixed platen (3), said tie rods (4) having their ends (5, 6) removably secured to said moulding head (2) and fixed platen (3), characterised by comprising hydraulically operated jaw means (14) which clamp one end (6) of at least one tie rod (4) and secure said end (6) to the fixed platen (3), the other end (5) of said tie rod (4) being connected to the moulding head (2) by hydraulically controlled latch means (13) which when in one position fixed said tie rod (4) to said head (2) whereas when in their other position they release said end (5) of the tie rod (4) from the head (2) to allow at least one hydraulic actuator (21) to move the tie rod (4) axially when said catch means (13) are in the release position.

2. A press as claimed in claim 1, characterised in that the catch means (13) operate on a box member (12) enclosing a threaded means (11) which cooperates with the thread of the tie rod (4).

3. A press as claimed in claim 2, characterised in that the threaded means (11) is associated with a ring gear (42) designed to regulate the position of the tie rod (4) by the action of a conventional gear means (43), on said ring gear (42) there operating braking means (44, 45, 46) on withdrawal of the tie rod (4) in order to keep the position of the ring gear (42) relative to its controlling gear means (43) unaltered.

4. A press as claimed in claim 3, characterised in that the braking means are pins (44) loaded by springs (45) disposed in seats (110) in the box member (12), said pins (44) cooperating with an annular member (46) acting on the ring gear (42).

5. A press as claimed in claim 4, characterising by comprising means (47, 48) arranged to oppose the action of the braking means (44, 45, 46) on the ring gear (42) when the tie rod (4) is not subjected to withdrawal.

6. A press as claimed in claim 5, characterised in that the means opposing the braking means (44, 45, 46) are a rocker member (47) a head (52) of which acts on the annular member (46) in opposition to the action of the pin (44), for this purpose there acting on said rocker member (47) a pin (48) which partly projects from the box member (12) towards the moulding head (2).

7. A press as claimed in claim 1, characterised in that the jaw means (14) comprise two opposing half-jaws (60, 61) provided with semicylindrical cavities (63) which when the half-jaws (60, 61) are clamped together define a corridor for the passage of the end (6) of the tie rod (4).

8. A press as claimed in claim 7, characterised in that the jaw means (14) are operated by a hydraulic actuator (14B) comprising at least one cylinder (64) in which a piston (65) moves, said cylinder being movable relative to the fixed platen (3) and comprising guide means (66) for the movement of a first half-jaw (60) of the jaw means (14), the other half-jaw (61) being movable rigidly with the piston (65) in the opposite direction to the first.

9. A press as claimed in claims 2 and 8, characterised by comprising sensor means (32, 33, 68, 59) arranged to sense the end-of-travel positions of the catch means (13) and of the jaw means (14).

10. A press as claimed in claims 1 and 2, characterised in that the actuator (21) comprises, rigid with the moulding head (2), a cylinder (72) within which there moves a piston (73), with said piston there being rigid a rod (74) fixed to the box member (12).

Fig. 1

Fig. 2

Fig. 3

Fig. 4

EP 0 340 489 A2

Fig. 5